Europäisches Patentamt

European Patent Office

Office européen des brevets

(11) Numéro de publication: **0 291 462 B1**

(12) **FASCICULE DE BREVET EUROPEEN**

(45) Date de publication de fascicule du brevet: **16.09.92**   (51) Int. Cl.5: **G01N 27/00**

(21) Numéro de dépôt: **88810305.8**

(22) Date de dépôt: **11.05.88**

Le dossier contient des informations techniques présentées postérieurement au dépôt de la demande et ne figurant pas dans le présent fascicule.

(54) **Micro-capteur à technologie intégrée pour la détection de la présence de certains gaz.**

(30) Priorité: **12.05.87 FR 8706635**

(43) Date de publication de la demande:
**17.11.88 Bulletin 88/46**

(45) Mention de la délivrance du brevet:
**16.09.92 Bulletin 92/38**

(84) Etats contractants désignés:
**CH DE GB LI**

(56) Documents cités:
**EP-A- 0 102 067**
**US-A- 4 580 439**

**PATENT ABSTRACTS OF JAPAN, vol. 7, no. 278 (P-242)[1423], 10 décembre 1983; & JP-A-58 154 652**

**PATENT ABSTRACTS OF JAPAN, vol. 8, no. 175 (P-294)[1612], 11 août 1984; & JP-A- 59 70 951**

(73) Titulaire: **CENTRE SUISSE D'ELECTRONIOUE ET DE MICROTECHNIOUE S.A.**
**Maladière 71**
**CH-2000 Neuchâtel 7(CH)**

(72) Inventeur: **Grisel, Alain**
**9, Chemin de la Godettaz**
**CH-1012 Lausanne(CH)**
Inventeur: **Demarne, Vincent**
**rue des Granges 17**
**CH-2034 Peseux(CH)**

(74) Mandataire: **Brulliard, Joel**
**c/o CENTRE SUISSE D'ELECTRONIOUE ET DE MICROTECHNIOUE S.A. Maladière 71**
**CH-2007 Neuchâtel(CH)**

## Description

La présente invention concerne la détection de certains gaz au moyen d'éléments sensibles dont la conductibilité électrique varie en présence de ce gaz.

Dans un article intitulé "Thin oxide microsensors on thin silicon membranes" (Micro-capteurs à oxyde mince disposés sur des membranes minces en silicium), IEEE Solid State Sensors Workshop, 2 à 5 juin 1986, Hilton Head Island, South Carolina, Shin-Chia Chang et David B. Micks décrivent un micro-capteur de gaz dont l'élément sensible est une couche d'oxyde d'étain ($SnO_2$). Ce micro-capteur est obtenu par des techniques classiques d'attaque chimique et de dépôt par pulvérisation à partir d'un substrat en silicium.

Pour que l'élément sensible de ce capteur puisse travailler dans de bonnes conditions, il convient de le chauffer à une température relativement élevée de l'ordre de 150 à 700°C, qui lui confère la rapidité de réponse et la sensibilité requises. L'échauffement est assuré par un élément chauffant en polysilicium, sous-jacent à l'élément sensible et délimité sur le substrat par les techniques évoquées ci-dessus.

Compte tenu de la température relativement élevée nécessaire au fonctionnement de l'élément sensible, le micro-capteur décrit dans l'article précité, prévoit de relier l'élément sensible et l'élément chauffant au substrat en silicium, au moyen d'une membrane mince obtenue par attaque chimique du silicium du substrat et offrant une bonne isolation thermique. Cette membrane s'oppose ainsi à une évacuation excessive de la chaleur vers le substrat et l'encapsulation du micro-capteur.

Le problème de l'isolation thermique de l'ensemble de détection formé par l'élément sensible et l'élément chauffant a été évoqué dans un autre article présenté par Seldon B. Crary au cours de la même conférence que l'article précité.

Dans les deux cas, les auteurs proposent de réaliser la membrane par attaque chimique du substrat en silicium, lequel est dopé au bore pour former une barrière à cette attaque. L'épaisseur de cette membrane doit être suffisante (supérieure à 2 microns par exemple) pour assurer la tenue mécanique de l'ensemble de détection et, de ce fait, la membrane constitue encore un chemin de conduction thermique important pour la chaleur engendrée par l'élément de chauffage en polysilicium, car elle entoure complètement l'ensemble de l'élément de détection et de l'élément chauffant. Cette épaisseur de la membrane est d'ailleurs augmentée par les couches d'oxyde nécessaires pour l'isolation électrique entre les pistes conductrices menant à ces éléments. Cette augmentation peut être de l'ordre de 0,5 micron, par exemple, et ces couches contribuent également à une fuite thermique à partir du centre du capteur vers l'extérieur.

Le brevet US-A-4580439 décrit un micro-capteur de gaz de l'art antérieur conforme au préambule des revendications indépendantes 1 et 2.

Pour obtenir une faible consommation d'énergie en fonctionnement permanent et pour réaliser des cycles rapides de variation de température de l'élément sensible, une inertie thermique très faible est nécessaire. Ce type de fonctionnement impose donc de chauffer la partie sensible de la structure rapidement en faisant passer un courant ayant une intensité suffisante dans l'élément chauffant. Cependant, ceci impose à l'ensemble du micro-capteur, et à la membrane en particulier, des contraintes mécaniques importantes pouvant donner naissance à des fissures, voire des ruptures dans le capteur.

On peut déduire de ce qui précède que, dans le cas des capteurs de l'art antérieur, la nécessité d'assurer la tenue mécanique de l'ensemble de détection s'oppose à une réduction de la consommation de ces capteurs à cause des pertes thermiques dues à ces éléments de support.

La présente invention a donc pour but de fournir un micro-capteur intégré du genre évoqué ci-dessus ayant une consommation réduite et offrant une tenue améliorée vis-à-vis des contraintes mécaniques.

L'invention a donc pour objet un micro-capteur de gaz à technologie intégrée réalisé dans un substrat semiconducteur et comportant un ensemble de détection comprenant un élément de détection formé d'au moins une couche sensible au gaz à détecter lorsqu'elle est à une température prédéterminée, ledit ensemble de détection étant fixé sur un cadre de support faisant partie intégrante dudit substrat et auquel ledit ensemble de détection est relié par des moyens de connexion mécaniques et électriques, caractérisé en ce que lesdits moyens de connexion comprennent des bras délimités à l'intérieur dudit cadre par des évidements pratiqués dans l'épaisseur du substrat, servant à supporter ledit ensemble de détection et dont la forme et l'agencement sont prévus de manière à minimiser les contraintes au niveau dudit ensemble de détection, des conducteurs électriques étant prévus sur ces bras pour assurer la liaison électrique de l'ensemble de détection vers l'extérieur.

Grâce à ces caractéristiques, l'ensemble de détection formé par l'élément de détection proprement dit n'est relié au cadre du capteur que par l'intermédiaire de plusieurs bras de support qui limitent les fuites thermiques et les contraintes à un strict minimum. Il en résulte ainsi non seulement un meilleur rendement énergétique du capteur, mais également une meilleure aptitude à supporter les variations de température et les contraintes mécaniques qui en résultent, car les bras peuvent se déformer plus facilement que ne pouvait le faire la membrane pleine connue de la technique antérieure.

L'invention sera mieux comprise à la lecture de la description qui va suivre, donnée uniquement à titre d'exemple et faite en se référant aux dessins annexés dans lesquels:

- la figure 1 représente une vue en plan du micro-capteur, suivant l'invention;
- les figures 2 à 5 représentent quatre stades successifs de fabrication du capteur suivant l'invention, chaque fois par une vue en coupe prise selon la ligne VI-VI de la figure 1;
- les figures 6 et 7 sont des vues en coupe respectivement selon les lignes VI-VI et VII-VII de la figure 1, du capteur terminé;
- les figures 8a et b représentent des vues en plan schématique de plusieurs configurations de capteurs semblables à celles décrites dans le préambule des revendications 1 et 2.
- la figure 8c représente une vue en plan schématique d'une configuration de capteur conforme à l'invention.

Il est à noter que sur les dessins, les proportions des épaisseurs des diverses couches ne sont pas exactement respectées pour des raisons de clarté. De même, la forme de ces couches ne reflète pas exactement la réalité, la représentation choisie n'étant destinée qu'à l'explication de la construction du capteur suivant l'invention.

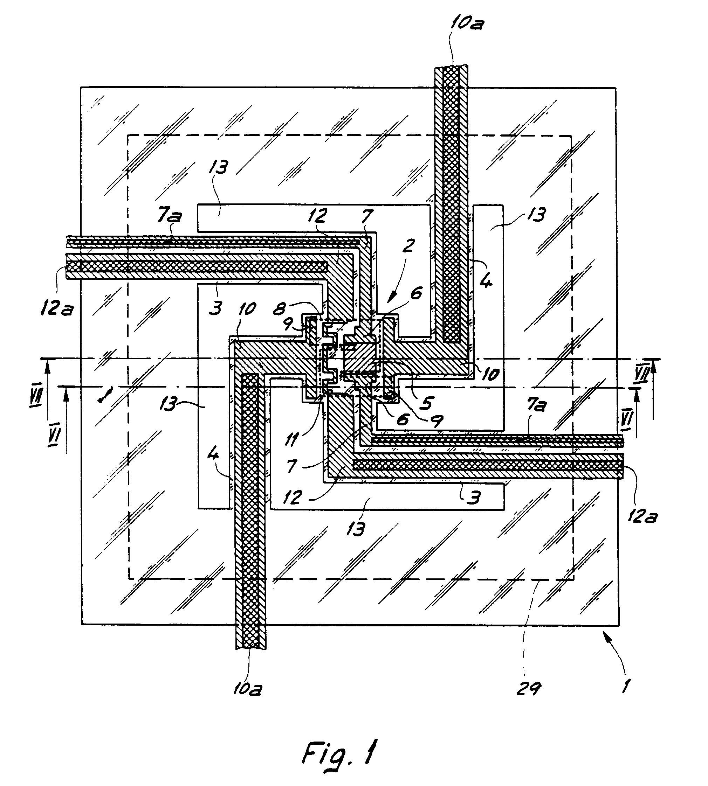

La figure 1 représente une vue en plan d'un exemple d'un microcapteur réalisé suivant l'invention.

Ce micro-capteur comprend un cadre de support 1 dont la forme est, de préférence carrée avec un côté de 35 mm, par exemple. Au centre de ce cadre 1 est prévu un ensemble de détection 2 relié mécaniquement au cadre de support 1 par des bras de support 3 et 4, au nombre de quatre, ayant chacun une forme coudée en L.

L'ensemble de détection 2 comprend un élément de détection 5 dont la conductibilité électrique varie en présence d'un gaz à détecter à condition qu'il soit porté à une température donnée située entre 150° et 700°C, par exemple. Dans le cas décrit, l'élément de détection 5 est fait d'une couche polycristalline en oxyde d'étain ($SnO_2$) et permet de détecter la présence de monoxyde de carbone (CO) ou d'éthanol ($C_2H_5OH$), par exemple.

L'élément de détection 5 est connecté à l'extérieur à travers des plots de contact 6 et des conducteurs électriques 7, ces derniers s'étendant sur les bras 3.

L'ensemble de détection 2 comporte également un élément de chauffage 8 en forme de méandre qui est sous-jacent à l'élément de détection 5 (on le voit représenté en pointillés sur la figure 1). Cet élément de chauffage peut être formé par une couche de siliciure, par exemple. Il est connecté à des plots de contact 9 reliés à des conducteurs 10 qui sont disposés sur les bras 4.

L'ensemble de détection 2 comprend encore une piste conductrice 11 en forme de méandre réalisée en une matière dont la résistivité varie avec la température et destinée à relever la température de l'ensemble de détection. Cette piste 11 est reliée à des conducteurs 12 prévus sur les bras 3. La piste conductrice 11 peut être reliée à un circuit de commande (non représenté) par l'intermédiaire des conducteurs 12 pour asservir l'intensité du courant circulant dans l'élément de chauffage 8 à une température de consigne souhaitée de l'élément de détection 5.

Le micro-capteur peut être encapsulé dans un boîtier standard du type T05 (non représenté) étant entendu que l'élément de détection 5 doit rester exposé pour pouvoir être en contact d'une atmosphère dans laquelle la présence du gaz doit être décelée.

La figure 1 montre clairement que les évidements 13 délimités par le cadre de support 1 et non occupés par les bras 3 et 4 et l'ensemble de détection 2, constituent des vides dans lesquels il y a absence de matière. Ces évidements 13 constituent donc des fentes traversant le micro-capteur de part en part. Les fuites thermiques interviennent essentiellement par l'intermédiaire des bras de support 3 et 4 qui portent l'ensemble de détection, et elles sont de ce fait limitées au strict minimum.

On va maintenant décrire les stades importants d'un procédé permettant d'obtenir la configuration du micro-capteur que l'on vient de décrire brièvement.

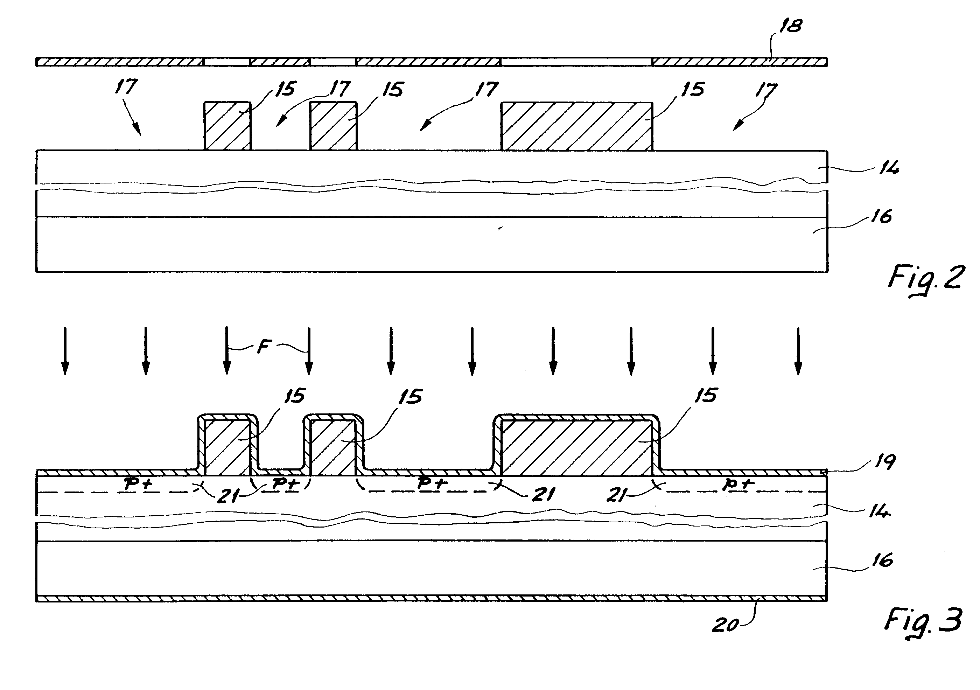

Sur les deux faces d'un substrat en silicium 14, d'une épaisseur de plusieurs centaines de microns, on fait d'abord croître une couche d'oxyde de silicium épais 15,16 d'une épaisseur de 1$\mu$m, par exemple (figure 2). Dans la couche supérieure 15, côté ensemble de détection de ce substrat, sont ensuite ménagées des ouvertures 17 de manière qu'il ne subsiste de cette couche 15 que des portions dont les contours correspondent ultérieurement aux fentes 13. Les ouvertures 17 sont réalisées par attaque chimique classique après exposition de la couche 15 à travers un masque 18.

Ensuite, les deux faces du substrat sont recouvertes entièrement d'une couche 19,20 (figure 3) d'oxyde thermique de silicium d'une épaisseur de 0,2$\mu$m par exemple, après quoi une implantation au bore, symbolisée par les flèches F, est effectuée, créant au droit des ouvertures 17 des zones p+ 21, qui formeront ultérieurement barrière contre une attaque chimique, ce qui sera expliqué plus loin.

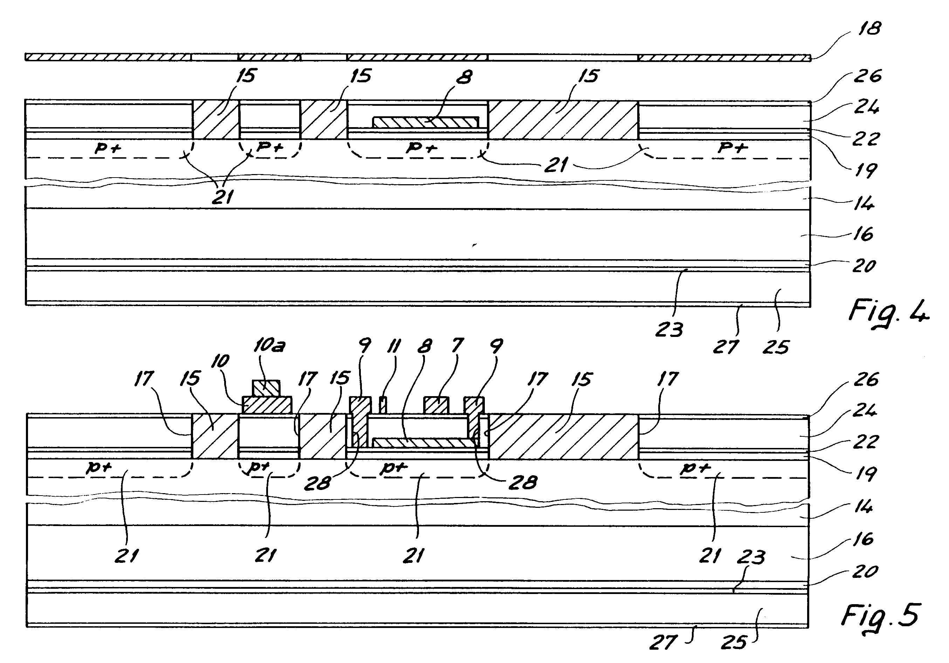

Le stade suivant du procédé de fabrication (figure 4 et suivantes) consiste à déposer en phase vapeur à basse pression (procédé LPCVD) une couche d'isolation 22,23 en nitrure de silicium ($Si_3N_4$) par exemple, sur les deux faces du substrat.

Il est alors procédé à la réalisation de l'élément de chauffage 8. Dans le cas représenté, il s'agit d'abord de déposer par évaporation ou CVD, une couche de silicium dans la zone centrale du substrat devant correspondre ultérieurement à l'ensemble de détection 2. Cette couche de silicium est recouverte d'une couche de titane et l'ensemble est soumis à une attaque au plasma pour former le méandre comme indiqué sur la figure 1. Ensuite un traitement thermique est utilisé pour former, à partir des dépôts de silicium et de titane, du siliciure de titane qui convient pour la résistance de chauffage 8.

Il est à noter qu'à titre de variante, l'élément de chauffage 8 peut être formé par une couche pleine en polysilicium.

Le dispositif est ensuite revêtu entièrement sur ses deux faces de deux couches d'isolation 24,25, respectivement 26,27. La première couche 24,25 est obtenue par dépôt en phase vapeur à basse pression d'oxyde de silicium d'une épaisseur de $1\mu m$ et la seconde est faite par un procédé identique en nitrure de silicium ($Si_3N_4$) d'une épaisseur de $0,15\mu m$, par exemple. Suivant une variante, les deux couches peuvent être remplacées par un seul dépôt de nitrure de silicium d'une épaisseur de $0,4\mu m$, par exemple.

L'ensemble ainsi obtenu est ensuite soumis à une attaque chimique pour éliminer les couches d'oxyde et de nitrure 19,22, 24 et 26 à la face supérieure du substrat, à l'aplomb des portions 15 en oxyde de silicium épais. Pour cette opération, on peut utiliser le même masque 18 que celui utilisé pour la délimitation des ouvertures 17 (figure 2).

Des ouvertures 28 sont alors ménagées dans la zone centrale du capteur pour permettre la réalisation des plots 9 destinés à contacter l'élément de chauffage 8 en siliciure de titane.

On peut ensuite déposer une couche d'oxyde d'étain ($SnO_2$) sur la zone centrale de l'ensemble puis délimiter la configuration de l'élément de détection 5 pour la méthode dite "lift-off" connue en soi, après quoi l'ensemble est soumis à une métallisation par exemple en chrome-titane-platine à l'aide de cette même méthode afin de former le détecteur de température 11, les contacts 6 et 9 et les pistes conductrices de connexion 7, 10 et 12. Pour améliorer la conductibilité de ces pistes, il est avantageux de prévoir sur chacune d'elles une bande d'or 7a, 10a, 12a déposée après la réalisation des connexions.

Les opérations qui viennent d'être décrites conduisent à la configuration de la figure 5 dans laquelle le substrat 14 présente encore son épaisseur uniforme.

Les opérations suivantes du procédé sont exécutées uniquement à partir de la face arrière (inférieure sur les figures) du substrat 14, la face correspondant à l'ensemble de détection devant être protégée convenablement afin de résister aux diverses attaques nécessaires.

Tout d'abord, les couches d'oxyde et de nitrures 20, 23, 25 et 27 sont ouvertes sur une surface correspondant au rectangle 29 montré en pointillés sur la figure 1, jusqu'à ce que la surface du substrat 14 en silicium soit atteinte.

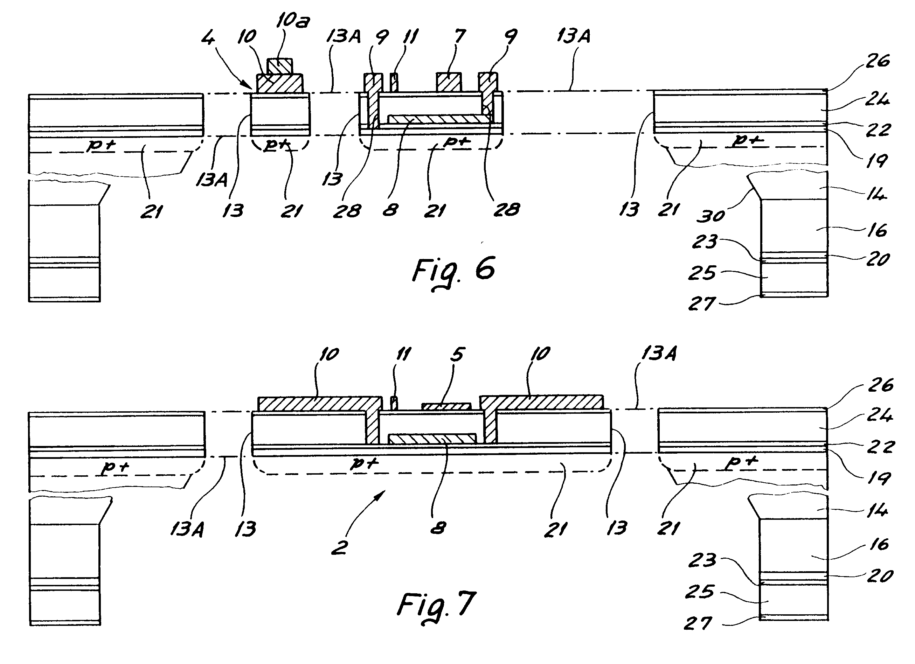

Le substrat est ensuite attaqué à l'hydroxyde de potassium (KOH) jusqu'à ce qu'il ne subsiste plus qu'une épaisseur d'environ $10\mu m$. Pendant cette attaque anisotrope, les plans <100> du silicium constituent des plans d'arrêt d'attaque, ce qui donne à la cavité 30 (figures 6 et 7) ainsi ménagée des pentes latérales d'environ 54°. Cette opération est suivie d'une attaque à l'éthylène-diamine qui parachève la réalisation de la cavité 30, les zones 21 dopées au bore constituant des barrières à cette attaque. Cependant, en dessous des portions 15 de l'oxyde de silicium épais, le substrat est enlevé jusqu'à la face inférieure de ces portions. En d'autres termes, à ce stade de fabrication, l'ensemble de détection 2 est relié au cadre 1 du capteur d'une part par les bras 3 et 4 et d'autre part par un voile d'oxyde de silicium remplissant pour le moment encore les fentes 13.

On peut laisser ces voiles (ce qui est indiqué en 13A sur la figure 6) si les conditions d'utilisation (chocs notamment) du capteur sont particulièrement critiques, mais il est également possible de les éliminer à l'aide d'acide fluorhydrique tamponné.

Dans le mode de réalisation des figures 1 à 7, l'ensemble de détection 2 est connecté mécaniquement au cadre 1 par l'intermédiaire des bras 3 et 4 ayant une forme coudée, disposition qui est favorable sur le plan de l'absorption des contraintes mécaniques en présence des variations de température imposées à l'ensemble de détection 2 et qui est également favorable à la limitation des pertes thermiques.

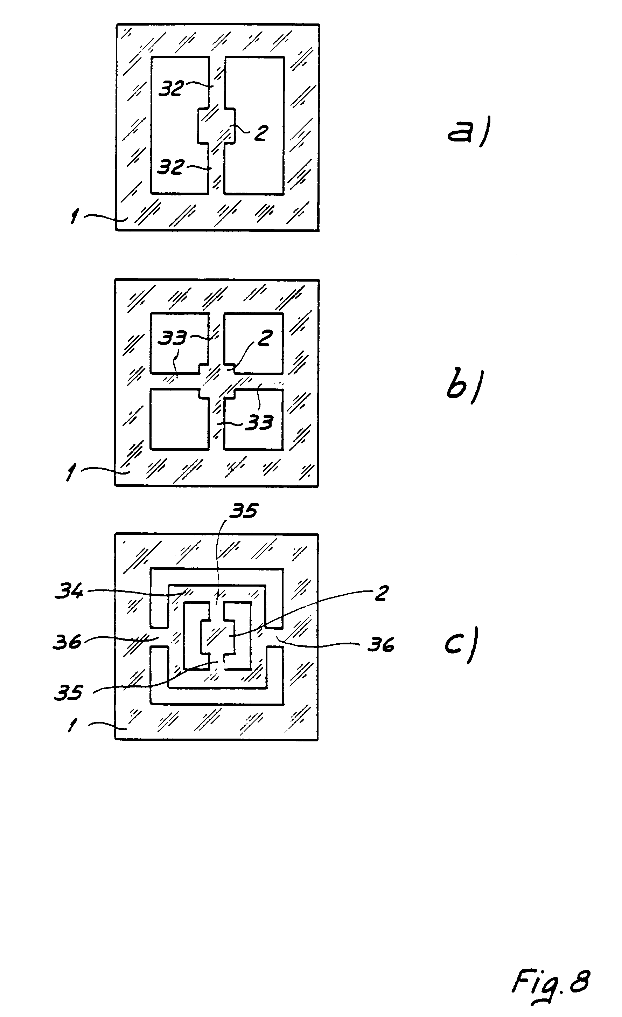

Les figures 8a et b montrent des configurations de capteurs semblables à celles décrites dans le préambule des revendications indépendantes 1 et 2. Dans chaque cas, le substrat définit un cadre 1 qui est relié à cet ensemble par deux bras alignés 32 (figure 8a) ou par quatre bras 33 disposés en croix.

La figure 8c montre qu'une d'autre configuration peut être envisagée pour suspendre l'ensemble de détection 2. Dans ce cas, le substrat définit un cadre 1 qui est relié à cet ensemble par un cadre intermédiaire 34 attaché par des bras 35 à l'ensemble de détection 2 et par des bras 36 décalés de 90° par rapport à ces derniers à ces derniers au cadre extérieur 1.

**Revendications**

1. Micro-capteur de gaz à technologie intégrée réalisé dans un substrat semiconducteur (14) et comportant un ensemble de détection (2) comprenant un élément de détection (5) formé d'au moins une couche sensible au gaz à détecter lorsqu'elle est à une température prédéterminée, ledit ensemble de détection (2) étant fixé sur un cadre de support (1) faisant partie intégrante dudit substrat (14) et auquel ledit ensemble de détection (2) est relié par des moyens de connexion mécaniques et électriques comprenant des bras de support (3, 4; 32, 33, 35, 36) délimités à l'intérieur dudit cadre (1) par des évidements pratiqués dans l'épaisseur du substrat (14), servant à supporter ledit ensemble de détection, des conducteurs électriques (7, 10, 12) étant prévus sur ces bras pour assurer la liaison électrique de l'ensemble de détection vers l'extérieur, **caractérisé en ce que:**

   - lesdits bras de support ont une forme coudée et se décomposent chacun en un premier segment de faible longueur et en un second segment de longueur plus importante que ledit premier segment, lesdits premiers segments étant solidaires de l'ensemble de détection (2) par l'intermédiaire de l'une de leurs extrémités et lesdits seconds segments étant solidaires du cadre de support (1) par l'intermédiaire de l'une de leurs extrémités, lesdites extrémités restantes formant les coudes desdits bras de support, de manière à absorber les contraintes mécaniques du fait des variations de température imposées à l'ensemble de détection (2) et à favoriser la limitation des pertes thermiques; et
   - lesdits bras de support de forme coudée sont au nombre de deux ou quatre.

2. Micro-capteur de gaz à technologie intégrée réalisé dans un substrat semiconducteur (14) et comportant un ensemble de détection (2) comprenant un élément de détection (5) formé d'au moins une couche sensible au gaz à détecter lorsqu'elle est à une température prédéterminée, ledit ensemble de détection (2) étant fixé sur un cadre de support (1) faisant partie intégrante dudit substrat (14) et auquel ledit ensemble de détection (2) est relié par des moyens de connexion mécaniques et électriques comprenant des bras de support (3, 4; 32, 33, 35, 36) délimités à l'intérieur dudit cadre (1) par des évidements (13) pratiqués dans l'épaisseur du substrat (14), servant à supporter ledit ensemble de détection, des conducteurs électriques (7, 10, 12) étant prévus sur ces bras pour assurer la liaison électrique de l'ensemble de détection vers l'extérieur, **caractérisé en ce que** le substrat définit un cadre extérieur (1) relié à l'ensemble de détection (2) par un cadre intermédiaire (34) attaché par des bras (35) audit ensemble de détection et par des bras (36), décalés de 90° par rapport à ces derniers, audit cadre extérieur.

3. Micro-capteur suivant l'une quelconque des revendications 1 ou 2, dans lequel lesdits évidements (13) sont formés par des fentes traversant le capteur d'une face à l'autre.

4. Micro-capteur suivant l'une quelconque des revendications 1 à 3, dans lequel lesdits évidements (13) sont délimités dans l'épaisseur du capteur par un voile (13A) formé par une couche d'isolation (15) déposée sur la face du substrat (14) préalablement à la délimitation dudit ensemble de détection (2) dans le substrat (14).

5. Micro-capteur suivant l'une quelconque des revendications 1 à 4, dans lequel l'ensemble de détection (2) comprend un élément sensible à la température (11) réalisé simultanément au dépôt desdits conducteurs électriques et destinés à l'asservissement de la température dudit élément de détection (5) à une température de consigne, et en ce que ledit élément sensible à la température est connecté à l'extérieur par des conducteurs (12) portés par le ou lesdits bras de support (3; 34-36).

6. Micro-capteur suivant l'une quelconque des revendications 1 à 5, comprenant un élément de chauffage (8) en relation d'échange thermique avec ledit élément de détection (5) et formé d'une couche déposée en un matériau susceptible de s'échauffer par effet Joule.

**Claims**

1. An integrated-circuit gas microsensor produced in a semiconductor substrate (14) and including a detection assembly (2) comprising a detection element (5) formed by at least one layer sensitive to the gas to be detected when it is at a predetermined temperature, the said detection assembly (2) being fixed to a support frame (1) forming an integral part of the said substrate (14) and to which the said detection assembly (2) is connected by mechanical and electrical connection means comprising support arms (3, 4; 32, 33, 35, 36) defined inside the said frame (1) by recesses (13) made in the body of the substrate (14), serving to support the said detection assembly, electrical conductors (7, 10, 12) being provided on these arms to provide the electrical connection of the detection assembly to the outside, characterised in that:

- the said support arms are bent in shape and each consist of a first, short segment and a second segment longer than the said first segment, the said first segments being fixed to the detection assembly (2) by means of one of their ends and the said second segments being fixed to the support frame (1) by means of one of their ends, the remaining said ends forming the bends in the said support arms, so as to absorb the mechanical stresses resulting from the temperature variations to which the detection assembly (2) is subjected and to assist the limitation of heat losses; and
- the said bent support arms are two or four in number.

2. An integrated-circuit gas microsensor produced in a semiconductor substrate (14) and including a detection assembly (2) comprising a detection element (5) formed by at least one layer sensitive to the gas to be detected when it is at a predetermined temperature, the said detection assembly (2) being fixed to a support frame (1) forming an integral part of the said substrate (14) and to which the said detection assembly (2) is connected by mechanical and electrical connection means comprising support arms (3, 4; 32, 33, 35, 36) defined inside the said frame (1) by recesses (13) made in the body of the substrate (14), serving to support the said detection assembly, electrical conductors (7, 10, 12) being provided on these arms to provide the electrical connection of the detection assembly to the outside, characterised in that the substrate defines an outer frame (1) connected to the detection assembly (2) by an intermediate frame (34) attached by arms (35) to the said detection assembly and by arms (36), offset by 90° with respect to the latter, to the said outer frame.

3. A microsensor according to either one of Claims 1 or 2, in which the said recesses (13) are formed by slots passing through the sensor from one face to the other.

4. A microsensor according to any one of Claims 1 to 3, in which the said recesses (13) are defined in the body of the sensor by a film (13A) formed by an insulating layer (15) deposited on the face of the substrate (14) prior to the defining of the said detection assembly (2) in the substrate (14).

5. A microsensor according to any one of Claims 1 to 4, in which the detection assembly (2) comprises a temperature-sensitive element (11) produced at the same time as the deposition of the said electrical conductors and intended to make the temperature of the said detection element (5) dependent on a reference temperature, and in that the said temperature-sensitive element is connected to the outside by conductors (12) carried by the said support arm or arms (3; 34-36).

6. A microsensor according to any one of Claims 1 to 5, comprising a heating element (8) in heat exchange relationship with the said detection element (5) and formed by a deposited layer of a material capable of being heated by Joule effect.

**Patentansprüche**

1. Mikro-Gasfühler in integrierter Technik, realisiert in einem Halbleitersubstrat (14), und umfassend eine Detektor-Baugruppe (2) mit einem Detektor-Element (5), gebildet von mindestens einer Schicht, die sensibel bezüglich des zu erfassenden Gases ist, wenn sie auf einer vorbestimmten Temperatur liegt, welche Detektor-Baugruppe (2) auf einem Stützrahmen (1) befestigt ist, der eine integrale Partie des Substrats (14) bildet und mit dem die Detektor-Baugruppe (2) über mechanische und elektrische Verbindungsmittel verbunden ist, welche Stützarme (3, 4; 32, 33, 35, 36) umfassen, begrenzt im Inneren des Rahmens (1) durch Ausnehmungen (13), die in die Dicke des Substrats (14) eingebracht sind, und die dazu dienen, die Detektor-Baugruppe abzustützen, wobei elektrische Leiter (7, 10, 12) auf diesen Armen vorgesehen sind zum Sicherstellen der elektrischen Verbindung der Detektor-Baugruppe nach außen, dadurch gekennzeichnet, daß

die Stützarme eine abgewinkelte Form aufweisen und jeweils aufgeteilt sind in ein erstes Segment geringer Länge und ein zweites Segment größerer Länge als das erste Segment, wobei die ersten Segmente verbunden sind mit der Detektor-Baugruppe (2) über eines ihrer Enden, und wobei die zweiten Segmente mit dem Stützrahmen (1) verbunden sind über eines ihrer Enden, wobei die verbleibenden Enden die Abwinkelungen der Stützarme bilden, derart, daß mechanische Belastungen infolge von Temperaturänderungen, denen die Detektor-Baugruppe (2) unterworfen ist, absorbiert werden und die Begrenzung thermischer Verluste begünstigt wird, und

die Stützarme abgewinkelter Form die Zahl zwei oder vier aufweisen.

2. Mikro-Gasfühler in integrierter Technik, realisiert in einem Halbleitersubstrat (14), und umfassend eine Detektor-Baugruppe (2) mit einem Detektor-Element (5), gebildet von mindestens einer für zu erfassendes Gas sensiblen Schicht, wenn sie eine vorbestimmte Temperatur aufweist, wobei die Detektor-Baugruppe (2) auf einem Stützrahmen (1) befestigt ist, der eine integrale Partie des Substrats (14) bildet, und wobei die Detektor-Baugruppe (2) mittels mechanischer und elektrischer Verbindungsmittel angeschlossen ist einschließlich Stützarmen (3, 4; 32, 33, 35, 36), nach innen bezüglich des Rahmens (1) begrenzt durch Ausnehmungen (13), die in die Dicke des Substrats (14) eingebracht sind, und die dazu dienen, die Detektor-Baugruppe abzustützen, wobei elektrische Leiter (7, 10, 12) auf diesen Armen vorgesehen sind zum Sicherstellen der elektrischen Verbindung der Detektor-Baugruppe nach außen, dadurch gekennzeichnet, daß das Substrat einen Außenrahmen (1) definiert, verbunden mit der Detektor-Baugruppe (2) durch einen Zwischenrahmen (34), der über Arme (35) mit der Detektor-Baugruppe verbunden ist und durch Arme (36), welche um 90° bezüglich der letzteren versetzt sind, mit dem Außenrahmen.

3. Mikrofühler nach einem der Ansprüche 1 oder 2, bei dem die Ausnehmungen (13) durch Schlitze gebildet sind, die den Fühler von einer Seite zur anderen durchsetzen.

4. Mikrofühler nach einem der Ansprüche 1 bis 3, bei dem die Ausnehmungen (13) in der Dicke des Fühlers durch eine Dünnschicht (13A) begrenzt sind, gebildet von einer Isolationsschicht (15), die auf der Seite des Substrats (14) vor der Begrenzung der Detektor-Baugruppe (2) in dem Substrat (14) aufgebracht worden ist.

5. Mikrofühler nach einem der Ansprüche 1 bis 4, bei dem die Detektor-Baugruppe (2) ein temperaturempfindliches Element (11) umfaßt, das gleichzeitig mit dem Aufbringen der elektrischen Leiter realisiert ist und bestimmt ist zur Regelung der Temperatur des Detektor-Elements (5) auf eine Referenztemperatur, und daß das temperaturempfindliche Element nach außen über Leiter (12) verbunden ist, die von dem oder den Stützarm(en) (3; 34-36) getragen sind.

6. Mikrofühler nach einem der Ansprüche 1 bis 5, umfassend ein Heizelement (8) in Wärmeaustauschbeziehung mit dem Detektor-Element (5), und gebildet von einer aufgebrachten Schicht aus einem Material, das durch den Joule-Effekt aufheizbar ist.

Fig. 1

**Fig. 2**

**Fig. 3**

EP 0 291 462 B1

Fig. 4

Fig. 5

Fig. 6

Fig. 7

a)

b)

c)

Fig. 8